# EUROPEAN PATENT SPECIFICATION

(11) **EP 3 611 007 B1**
(45) Date of publication and mention of the grant of the patent: **04.12.2024**
(21) Application number: 17905747.6
(22) Date of filing: 20.12.2017
(51) Int. Cl.: B29C 64/118, B33Y 40/00, B33Y 30/00, B29C 64/209, B29C 64/321, B29C 64/295, B26D 1/143

(54) **PRINT HEAD FOR ADDITIVE MANUFACTURING OF ARTICLES**
DRUCKKOPF FÜR DIE GENERATIVE FERTIGUNG VON ARTIKELN
TÊTE D'IMPRESSION POUR FABRICATION ADDITIVE DE PIÈCES

(30) Priority: 10.04.2017 RU 2017111944
(43) Date of publication of application: 19.02.2020
(73) Proprietor: ANISOPRINT 3D PRINTING TECHNOLOGY (SUZHOU) LIMITED COMPANY, Suzhou City, Jiangsu Province (CN)
(72) Inventor: AZAROV, Andrey Valerievich, Moscow 115280 (RU); GOLUBEV, Mikhail Valerievich, Moscow 105062 (RU); ANTONOV, Fedor Konstantinovich, Moscow 119415 (RU); KHAZIEV, Aleksey Ravkatovich, Moscow 111674 (RU)
(74) Representative: Dennemeyer & Associates S.A.
(86) International application number: PCT/RU2017/050129
(87) International publication number: WO 2018/190750

(56) References cited:
- WO-A1-2005/098498
- DE-T5- 112015 001 860
- US-A1- 2016 067 928
- US-A1- 2016 263 822
- US-A1- 2017 066 187

## Description

### Field of Invention

The invention relates to the field of additive technologies and can be used for the manufacturing of parts and structures made of composite materials reinforced with continuous fibers, such as brackets, fittings, basic parts, wearable products, lattice and honeycomb structures for use in aviation, rocket and space industries, medicine, automotive industry, etc.

### Background

Known in the art are 3D printing equipment using composite fibers. The analogues are described in the MarkForged applications (USA):
Known in the art are 3D printing methods and equipment using composite fibers. The closest analogues are described in the MarkForged applications (USA):
[1] Application US20140291886 - Three-dimensional printing, IPC B29C47/00, Published 02.10.2014;
[2] Application US20140328963 - Apparatus for fiber reinforced additive manufacturing, IPC B29C67/00, Published 06.11.2014;
[3] Application US20140328964 - Three-dimensional printing, IPC B29C67/00, Published 06.11.2014;
[4] Application US20140361460 - Methods for fiber reinforced additive manufacturing, IPC B29C65/40, B29C67/00, Published 11.12.2014;
[5] Application US20150108677 - Three-dimensional printer with composite filament fabrication, IPC B29C67/00, Published 23.04.2015;
[6] Application US20150165691 - Methods for fiber reinforced additive manufacturing, IPC B29C67/00, Published 18.06.2015;
[7] US2016200047 (US9156205B2) - Three-dimensional printer with composite filament fabrication, Published 14.07.2016.
[8] US2016368213 (US9370896B2) - Methods for fiber reinforced additive manufacturing, Published 22.12.2016.
[9] US2016129643 (US9149988B2) - Three-dimensional printing, Published 12.05.2016.
[10] US 2016067928 - Multilayer fiber reinforcement design for 3D printing, Published 10.03.2016.
[11] US 2016107379 - Composite filament 3D printing using complementary reinforcement formations, Published 21.04.2016.

The applications describe the method and an appropriate 3D-printer of special design for printing with the use of composite fibers. The composite fiber includes continuous or semi-continuous reinforcing fibers as a filler. The matrix is a thermoplastic material in a solid state. The composite fiber is fed into the extruder by the feeding device heated to a temperature exceeding the melting temperature of the matrix material of a composite fiber and laid out through the nozzle onto the table and fused to it, which allows for forming a part. The printer may have a composite fiber cutting system located in the area between the feeding mechanism and the nozzle.

The described device can be used only if a composite fiber is impregnated with a thermoplastic matrix. However, this approach has a number of disadvantages; in particular, it is difficult to provide high-quality impregnation of the fiber bundle with thermoplastics, which is due to the extremely high viscosity of their melts. The resulting material may have high porosity and the fibers will not work together. In order to implement high-quality impregnation, it is necessary to expose the material to high pressures (dozens of atmospheres), but in this case, the damage of fibers is possible and the internal structure of the material can be uneven. In order to avoid the difficulties associated with the impregnation of a bundle of fibers with thermoplastics, the printing can be performed using a composite fiber impregnated with a thermosetting binder and pre-cured. In this case, the extruder shall be fed with both a composite fiber and thermoplastics, which will bind the fibers together during printing.

Also, the design described in the previous applications has only one channel for feeding the composite fiber with a given volume ratio of reinforcing fibers and plastic, which does not allow for varying the volume fraction of fibers in the printing process.

### Summary of the Invention

The objective of the invention is the manufacture of functional parts by three-dimensional printing from composite materials with a complex shape and internal structure, which have high physical and mechanical characteristics, which implies:
- the use of a wide range of reinforcing fibers - not only the fibers impregnated with a thermoplastic polymer, but also the fibers impregnated with a thermosetting polymer and cured, as well as metal wire;
- the change in the volume fraction of reinforcing fibers in the process of laying out reinforced thermoplastics;
- laying of fibers along complex curvilinear trajectories;
- the cutting of reinforcing fibers and the manufacture of parts with reinforced and non-reinforced zones.

The technical result is an improvement in the physical and mechanical characteristics of parts, a reduction in the mass of parts, and a reduction in the cost of the manufacture of complex shape products from composite materials.

The task is solved and the technical result is achieved owing to the printhead disclosed in appended claims.

The technical result is also achieved due to the fact that the plastic filament feeding mechanism contains an electric drive and driven rollers, between which a plastic filament passes.

The technical result is also achieved due to the fact that the reinforcing fiber feeding mechanism contains an electric drive and driven rollers, between which a fiber passes.

The technical result is also achieved due to the fact that the reinforcing fiber cutting mechanism located between the reinforcing fiber feeding mechanism and the heating unit contains a stationary knife and a servo drive which drives a movable knife.

The technical result is also achieved due to the fact that the reinforcing fiber cutting mechanism located between the reinforcing fiber feeding mechanism and the heating unit contains a servo drive, the axle of which is fitted with a movable knife in the form of a circular cylinder with a groove made to a depth exceeding half the diameter of the cylinder.

The technical result is also achieved due to the fact that the stationary knife is a tube with two holes - namely, the inlet, and the outlet.

The technical result is also achieved due to the fact that the outer diameter of the movable knife is equal to the internal diameter of the stationary knife and the movable knife is mounted inside the stationary knife by sliding fit.

The technical result is also achieved due to the fact that the plastic filament feeding tube connects the output of the plastic filament feeding mechanism and the input channel of the heating unit intended for a plastic filament.

The technical result is also achieved due to the fact that the reinforcing fiber feeding tubes connect the output of the reinforcing fiber feeding mechanism to the input of the reinforcing fiber cutting mechanism and the output of the reinforcing fiber cutting mechanism to the input channel of the heating block intended for a reinforced fiber.

The task in view is also solved and the technical result is to be achieved by the printhead comprising a mechanism for feeding a first plastic filament, a mechanism for feeding a second plastic filament, a mechanism for feeding a reinforcing fiber, a mechanism for cutting the reinforcing fiber, a feeding tube for the first plastic filament, a feeding tube for the second plastic filament, feeding tubes for the reinforcing fiber and a heating unit, wherein the heating unit comprises a heater, a thermocouple or a thermistor, three input channels - a reinforcing fiber feeding channel, a first plastic filament feeding channel and a second plastic filament feeding channel, and two nozzles with output channels for reinforced plastic polymer and pure plastic polymer, and wherein the first plastic filament feeding channel is connected to the reinforcing fiber feeding channel inside the heating unit, and the input reinforcing fiber feeding channel is arranged coaxially with the output reinforced plastic polymer channel.

The technical result is also achieved due to the fact that the first plastic filament feeding mechanism contains an electric drive and driven rollers, between which the first plastic filament passes.

The technical result is also achieved due to the fact that the feeding mechanism for an second plastic filament contains an electric drive and driven rollers, between which an second plastic filament passes.

The technical result is also achieved due to the fact that the feeding mechanism of reinforcing fibers contains an electric drive and driven rollers, between which the fiber passes.

The technical result is also achieved due to the fact that the cutting mechanism for reinforcing fibers, which locates between the feeding mechanism for reinforcing fibers and the heating unit, contains a stationary knife and a servo drive, which drives a movable knife.

The technical result is also achieved due to the fact that the cutting mechanism for reinforcing fibers, which locates between the feeding mechanism for reinforcing fibers and the heating unit, contains a servo drive, the axle of which is fitted with a movable knife in the form of a circular cylinder with a groove made to a depth exceeding half the diameter of the cylinder.

The technical result is also achieved due to the fact that the stationary knife is a tube with two holes - namely, the inlet, and the outlet.

The technical result is also achieved due to the fact that the outer diameter of the movable knife is equal to the internal diameter of the stationary knife and the movable knife is mounted inside the stationary knife by sliding fit.

The technical result is also achieved due to the fact that the feeding tube for a first plastic filament connects the output of the first plastic filament feeding mechanism and the heating unit input channel intended for a first plastic filament.

The technical result is also achieved due to the fact that the feeding tube for second plastic filament connects the output of the feeding mechanism for second plastic filaments and the heating unit input channel intended for additional plastic filaments.

The technical result is also achieved due to the fact that the feeding tubes for reinforcing fibers connect the output of the reinforcing fiber feed mechanism to the input of the reinforcing fiber cutting mechanism and the output of the reinforcing fiber cutting mechanism to the heating unit input channel intended for reinforced fibers.

### Brief Description of the Drawings

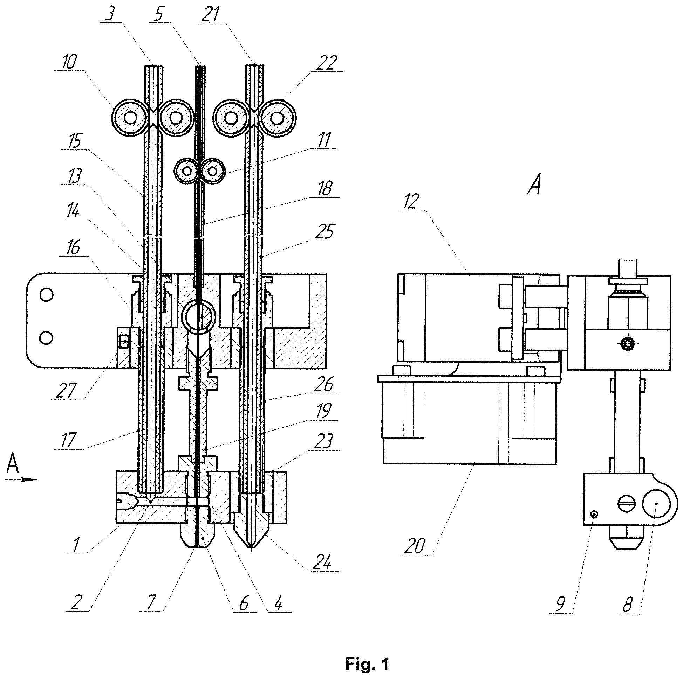

Fig. 1 - Printhead.

The following positions on the figures are indicated by numbers:
1 - *heating unit;*
*2* - *thermoplastic polymer feeding channel;*
*3* - *plastic filament made of thermoplastic polymer;*
*4* - *reinforcing fiber feeding channel;*
*5* - *reinforcing fiber,*
*6* - *nozzle;*
7 - *output channel for laying out reinforced thermoplastic polymer;*
8 - *heater;*
*9* - *thermistor or thermocouple;*
10 - *plastic filament feeding mechanism;*
11 - *reinforcing fiber feeding mechanism;*
*12 - drive of reinforcing fiber cutting mechanism;*
*13 - movable knife;*
*14* - *stationary knife;*
*15 - plastic filament feeding tube;*
*16 - feeding tube fitting;*
*17 - thermal barrier;*
*18* - *tube for feeding a reinforcing fiber from the feeding mechanism to the cutting mechanism;*
*19* - *tube for feeding a reinforcing fiber from the cutting mechanism to the heating unit;*
*20* - *fan;*
*21* - *second plastic filament made of thermoplastic polymer;*
*22* - *second plastic filament feeding mechanism;*
*23* - *second plastic filament feeding channel;*
*24* - *nozzle for laying out thermoplastic polymer;*
*25* - *second plastic filament feeding tube;*
*26* - *thermal barrier for second plastic filament*
*27 - adjusting screw*

### Detailed Description of the Invention

The application describes the printhead and the process of the manufacture of composite materials (parts) based on carbon fibers in combination with thermosetting and/or thermoplastic matrix.

The task in view is solved and the technical result is achieved due to the fact that the printhead heating unit is fed with reinforcing fiber and plastic filament through two separate channels. Thus, it is possible to use different types of reinforcing fibers; and also, by changing the speed of a plastic filament in the printing process, the volume fraction of fibers in the plastic can be adjusted, in contrast to the previously mentioned analogues, in which the volume fraction of fibers is set at the stage of manufacture of composite fiber. This allows to solve the problem of creating parts from composite materials with a complex internal structure. Structures that can be manufactured in this way include, for example, lattice composite structures and other types of structures. Also, the technical result is achieved through the presence of the mechanisms for cutting and feeding a reinforcing fiber, as well as the feeding tubes, which allows to cut a reinforcing fiber in the process of printing, to feed the fiber into the heating unit after cutting to resume the printing, and also, by adjusting the feed rate of the fiber in the printing process, to control the tension of a reinforcing fiber by increasing the tension on the straight sections of the trajectory to improve the mechanical characteristics of the material and by reducing it on the sections with great curvature to avoid a slipping of a reinforcing fiber.

The schematic of the print head is shown in Fig. 1. Heating unit 1 have input channels - thermoplastic polymer feeding channel 2 receiving thermoplastic polymer filament 3 and reinforcing fiber feeding channel 4 receiving reinforcing fiber 5. Reinforcing fibers to be used can include composite fibers made of carbon, glass, organic or combined bundles impregnated with a polymer binder (thermoplastic resin binder or cured thermosetting binder, for example, in the form of polyester, phenolformaldehyde, urethane, epoxy, silicone, polyimide or bismaleimide resins), or metal wire. Thermoplastic filaments to be used can include filaments made of thermoplastic material such as ABS, polylactide, polyamide, polyethylene terephthalate glycol, polyethyrimide, polysulfone, polyesterephyrketone or other thermoplastic material. The channel to feed a thermoplastic polymer is connected with the channel for feeding a reinforcing fiber, allowing the thermoplastic to coat a reinforcing fiber passing through the reinforcing fiber feeding channel. Also, the heating unit is equipped with nozzle 6 with an output channel for reinforced thermoplastic polymer 7. Output channel 7 is located coaxially with the input channel for reinforcing fiber 4, which serves, first, to prevent the bending and damages to the fiber inside the heating unit, and, secondly, to ensure the possibility of recharging the fiber after cutting and resuming the laying-out of reinforced thermoplastics. The diameter of input channel is smaller than the diameter of output channel to minimize the thermoplastic melt yield, when printing, through the channel for feeding the reinforcing fiber. Usually, the input channel shall have its diameter greater than the reinforcing fiber diameter by no more than 2-4 times. Also, a gap is present between the tube for feeding reinforcing fiber to the heating unit 19 and the input channel 4 of the heating unit 1, which prevents the excessive thermoplastic melt from going up to the reinforcing fiber feeding tube 19, as this tube is not heated and the molten thermoplastic can cool and solidify in this tube, blocking the channel. The heating unit 1 is equipped with heater 8 and temperature sensor 9 (thermocouple and thermistor).

The thermoplastic filament is fed to the heating unit by means of thermoplastic filament feeding mechanism 10 consisting of an electric drive (for example, a stepping motor or a servo drive) and rollers. At least one roller is driving and operated by the rotating shaft of the electric drive. The driving roller has incisions allowing the feed of thermoplastic polymer filaments without slipping. The driven roller can both have notches or do not have them. The rollers are mechanically pressed against a thermoplastic filament to prevent it from slipping, for example, by means of a spring. An embodiment is possible using two driving rollers connected by a mechanical transmission.

A reinforcing fiber is fed into the heating unit by means of reinforcing fiber feeding mechanism 11 consisting of an electric drive (for example, a stepping motor or a servo drive) and rollers. At least one roller is driving and operated by the rotating shaft of the electric drive. At least, one of the rollers, preferably driven one, has a rubber coating in order to prevent an excessive compression and damage to the reinforcing fiber. The rollers are mechanically pressed against a reinforcing fiber to prevent it from slipping, for example, by a spring. An embodiment is possible using two driving rollers connected by a mechanical transmission.

A mechanism for cutting a reinforcing fiber is located between the feeding mechanism for a reinforcing fiber and the heating unit; the cutting mechanism consists of drive 12, for example, a servo drive with a reducer connected by a mechanical transmission with movable knife 13 and stationary knife 14. The servo drive shall provide sufficient force to cut the fiber. The amount of force depends on the type (carbon, glass, organic) and the linear density of a fiber. For example, the cutting of a carbon fiber with a linear density of 66 tex, a force of not less than 10 N is required, in the case of a density of 200 tex - not less than 17 N. Knives are made of materials with high hardness, such as hardened steel or ceramics. The reinforcing fiber cutting mechanism should be located in close proximity to the heating unit at a distance of up to 300 mm, because the minimum length of the continuous portion of a reinforced thermoplastic laid on the work surface increases with increasing this distance.

It is possible to implement a cutting mechanism in which the servo axle is fitted with movable knife 13 in the form of a circular cylinder with a groove made to a depth exceeding the radius of the cylinder. Stationary knife is a tube with two holes - namely, the inlet port, and the outlet port of a larger diameter. The outer diameter of the movable knife is equal to the internal diameter of the stationary knife and the movable knife is mounted inside the stationary knife by sliding fit. In the process of printing, the fiber passes through the inlet port of the stationary knife, the groove of the movable knife and the outlet port of the stationary knife. When cutting, the servo drive turns the movable knife and the fiber is cut between the edge of the movable knife groove and the edge of the inlet of the stationary knife. On cutting, the servo drive returns the movable knife to its neutral position.

Thermoplastic filament feeding mechanism of 10 and reinforcing fiber feeding mechanism 11 can be located both near the reinforcing fiber cutting mechanism and the heating block and at a distance of up to 2 m. A thermoplastic filament from the feeding mechanism outlet to the heating unit inlet channel is fed through feed tube 15 and thermal barrier 17 interconnected by fitting 16. The feeding tube is made of a material with a low coefficient of friction, for example, PTFE. The thermal barrier is made of a material with a relatively small thermal conductivity, for example, steel or titan and serves to prevent heat removal from the heating unit to the fitting and the tube. To increase its efficiency, the thermal barrier can be further cooled fan 20 and/or a radiator. A reinforcing fiber from the output of the feed mechanism to the input of the reinforcing fiber cutting mechanism is fed inside tube 18, and from the output of the cutting mechanism to the input channel of the heating unit - with the help tube 19.

In order for the printhead to be able to lay not only thermoplastics reinforced with continuous fibers, but also pure thermoplastics (or thermoplastics reinforced with discrete fibers), second thermoplastic filament 21 can be fed into the printhead. In this case, the embodiment of a printhead has a mechanism for feeding second plastic filament 22, heating unit 1 has port 23, in which nozzle 24 for printing with thermoplastics is installed. The Additional thermoplastic filament feeding mechanism 22 and nozzle 24 are connected by feeding tube 25 and thermal barrier 26 in the same way as main thermoplastic filament 3 is fed. In order to ensure that the outlet holes of nozzles 6 and 24 are located on the same level, the embodiment provides for the possibility of shifting heating unit 1 and nozzle 24 relative to each other vertically. Fastening the parts together can be carried out, for example, using set screws 27.

The printhead is mounted on a manipulator with three or more degrees of freedom (for example, a portal three-axis manipulator or a six-axis robot).

The printing process is as follows. Heating unit 1 using heater 8 is heated to a temperature exceeding the melting temperature of a thermoplastic filament and, if a reinforcing fiber impregnated with a thermosetting binder and cured is used, the glass transition temperature of the thermosetting binder of a reinforcing fiber. The temperature is kept constant by means of a feedback control system with the use of temperature sensor 9.

The printhead mounted on the manipulator moves along a predetermined trajectory at a certain distance from the surface, corresponding to the layer thickness (for example, 0.05-0.5 mm). At the same time, the electric drives of the feeding mechanisms turn the rollers by commands from the control system to feed thermoplastic filaments and/or reinforcing fibers to the heating unit.

If the printing is carried out with reinforced thermoplastics, the feed is carried out by the drives of the thermoplastic filament feeding mechanism 10 and reinforcing fiber feeding mechanism 11. By adjusting the feeding rate of reinforcing fiber during printing, its tension can be controlled. The tension can be increased when the printhead moves along a straight line relative to the printer platform to improve the mechanical properties of the material and decreased when the printhead moves along an arc to avoid a sliding of a reinforcing fiber from the laying trajectory. In addition, to prevent the reinforcing fiber from slipping, the outlet of 7 can be blown by cold air, for example, by means of a fan. By adjusting the feeding rate of a plastic filament during printing, you can control the volume fraction of reinforcing fibers in the resulting composite material.

If the printing is carried out with a clean thermoplastic, the feed is provided by the drive of second plastic filament feeding mechanism 22.

When it is necessary to switch over from reinforced thermoplastic printing to pure thermoplastic printing or when switching over from one portion of a part to another one in the case of printing with reinforced thermoplastics, the cutting of a reinforcing fiber is made. In this case, the control system, taking into account the distance between the cutting point and the nozzle face, stops in advance the movement of the printhead and the feed of a reinforcing fiber and plastic and gives the command to drive 12 of reinforcing fiber cutting mechanism. The drive of the cutting mechanism turns and the movable knife moves relative to the stationary one and cuts off the reinforcing fiber passing between the working surfaces of the knives.

## Claims

1. A printhead comprising:
a mechanism (10) for feeding a plastic filament,
a mechanism (11) for feeding a reinforcing fiber,
a mechanism (13, 14) for cutting the reinforcing fiber,
a feeding tube (15) for the plastic filament,
a feeding tube (18) for feeding the reinforcing fiber from the feeding mechanism (11) to the cutting mechanism (13, 14),
a feeding tube (19) for feeding the reinforcing fiber from the cutting mechanism (13, 14) to a heating unit (1); and
the heating unit (1);
wherein the heating unit (1) comprises:
a heater (8),
a thermocouple (9) or a thermistor (9),
two input channels, namely a reinforcing fiber feeding channel (4) and a plastic filament feeding channel (2), and
a nozzle (6) having an output channel (7) for a reinforced plastic polymer;
wherein the plastic filament feeding channel (2) is connected to the reinforcing fiber feeding channel (4) inside the heating unit (1), and the input reinforcing fiber feeding channel (4) is arranged coaxially with the output reinforced plastic polymer channel (7);
**characterized in that**
the input reinforcing fiber feeding channel (4) of the heating unit (1) has a diameter greater than the reinforcing fiber diameter by no more than 2-4 times,
the diameter of the input reinforcing fiber feeding channel (4) being smaller than the diameter of the output channel (7) to minimize the thermoplastic melt yield, when printing, through the reinforcing fiber feeding channel (4),
and **in that**
a gap is present between the feeding tube (15) for the reinforcing fiber and the reinforcing fiber feeding channel (4) of the heating unit (1).

2. The printhead according to claim 1, wherein the reinforcing fiber cutting mechanism (13, 14) is located between the reinforcing fiber feeding mechanism (11) and the heating unit (1) and contains a stationary knife (14) and a servo drive (12), which drives a movable knife (13).

3. The printhead according to claim 1, wherein the reinforcing fiber cutting mechanism (13, 14) is located between the reinforcing fiber feeding mechanism (11) and the heating unit (1) and contains a servo drive (12), the axle of which is fitted with a movable knife (13), which is a circular cylinder with a groove made to a depth exceeding half the diameter of the cylinder.

4. The printhead according to claim 3, wherein the stationary knife (14) is a tube with two holes - the inlet hole, and the outlet hole of larger diameter.

5. The printhead according to claims 3, wherein the outer diameter of the movable knife (13) is equal to the inner diameter of the stationary knife (14) and the movable knife (13) is installed inside the stationary knife (14) by sliding fit.

6. The printhead according to claim 1, wherein the feeding tube (18) for feeding the reinforcing fiber from the feeding mechanism (11) to the cutting mechanism (13, 14) connects the output of the reinforcing fiber feeding mechanism (11) to the input of the reinforcing fiber cutting mechanism (13, 14) and the feeding tube (19) for feeding the reinforcing fiber from the cutting mechanism (13, 14) to a heating unit (1) connects the output of the reinforcing fiber cutting mechanism (13, 14) to the reinforcing fiber feeding channel (4) of the heating unit (1).

7. The printhead according to claim 1, wherein the input reinforcing fiber feeding channel (4) has a diameter smaller than the diameter of the output channel (7) of the nozzle (6).

## Patentansprüche

1. Druckkopf, der Folgendes umfasst:
einen Mechanismus (10) zum Zuführen eines Kunststofffadens,
einen Mechanismus (11) zum Zuführen einer verstärkenden Faser,
einen Mechanismus (13, 14) zum Schneiden der verstärkenden Faser,
eine Zuführungsröhre (15) für den Kunststofffaden,
eine Zuführungsröhre (18) zum Zuführen der verstärkenden Faser von dem Zuführungsmechanismus (11) zu dem Schneidemechanismus (13, 14),
eine Zuführungsröhre (19) zum Zuführen der verstärkenden Faser von dem Schneidemechanismus (13, 14) zur Heizeinheit (1); und
die Heizeinheit (1);
wobei die Heizeinheit (1) Folgendes umfasst:
eine Heizung (8),
ein Thermoelement (9) oder einen Thermistor (9),
zwei Eingangskanäle, nämlich einen Zuführungskanal für die verstärkende Faser (4) und einen
Zuführungskanal für den Kunststofffaden (2), und
eine Düse (6), die einen Ausgangskanal (7) für ein verstärktes Kunststoffpolymer aufweist; wobei der Zuführungskanal für den Kunststofffaden (2) mit dem Zuführungskanal für die verstärkende Faser (4) innerhalb der Heizeinheit (1) verbunden ist und der Eingangskanal zum Zuführen der verstärkenden Faser (4) koaxial mit dem Ausgangskanal für das verstärkte Kunststoffpolymer (7) angeordnet ist;
**dadurch gekennzeichnet, dass**
Der Eingangskanal zum Zuführen der verstärkenden Faser (4) der Heizeinheit (1) einen Durchmesser aufweist, der nicht mehr als das 2- bis 4-fache des Durchmessers der verstärkenden Faser ist, und der Durchmesser des Eingangskanals zum Zuführen der verstärkenden Faser (4) kleiner als der Durchmesser des Ausgangskanals (7) ist, um beim Drucken die thermoplastische Schmelzausbeute durch den Zuführungskanal für die verstärkende Faser (4) zu minimieren, und dadurch, dass
zwischen der Zuführungsröhre (15) für die verstärkende Faser und dem Zuführungskanal für die verstärkende Faser (4) der Heizeinheit (1) eine Lücke besteht.

2. Druckkopf nach Anspruch 1, wobei der Schneidemechanismus für die verstärkende Faser (13, 14) zwischen dem Zuführungsmechanismus für die verstärkende Faser (11) und der Heizeinheit (1) angeordnet ist und ein feststehendes Messer (14) und einen Servoantrieb (12) enthält, der ein bewegliches Messer (13) antreibt.

3. Druckkopf nach Anspruch 1, wobei der Schneidemechanismus für die verstärkende Faser (13, 14) zwischen dem Zuführungsmechanismus für die verstärkende Faser (11) und der Heizeinheit (1) angeordnet ist und einen Servoantrieb (12) enthält, dessen Achse mit einem beweglichen Messer (13) ausgestattet ist, das ein Kreiszylinder mit einer Nut ist, die bis zu einer den halben Durchmesser des Zylinders überschreitenden Tiefe hergestellt ist.

4. Druckkopf gemäß Anspruch 3, wobei das feststehende Messer (14) eine Röhre mit zwei Löchern ist - dem Einlassloch und dem Auslassloch, dessen Durchmesser größer ist.

5. Druckkopf gemäß Anspruch 3, wobei der Außendurchmesser des beweglichen Messers (13) gleich dem Innendurchmesser des feststehenden Messers (14) ist und das bewegliche Messer (13) im feststehenden Messer (14) mittels Gleitsitz eingebaut ist.

6. Druckkopf nach Anspruch 1, wobei die Zuführungsröhre (18) zum Zuführen der verstärkenden Faser von dem Zuführungsmechanismus (11) zu dem Schneidemechanismus (13, 14) den Ausgang des Zuführungsmechanismus für die verstärkende Faser (11) mit dem Eingang des Schneidemechanismus für die verstärkende Faser (13, 14) verbindet und die Zuführungsröhre (19) zum Zuführen der verstärkenden Faser von dem Schneidemechanismus (13, 14) zu einer Heizeinheit (1) den Ausgang des Schneidemechanismus für die verstärkende Faser (13, 14) mit Zuführungskanal für die verstärkende Faser (4) der Heizeinheit (1) verbindet.

7. Druckkopf nach Anspruch 1, wobei der Eingangskanal zum Zuführen der verstärkenden Faser (4) einen Durchmesser aufweist, der kleiner als der Durchmesser des Ausgangskanals (7) der Düse (6) ist.

## Revendications

1. Tête d'impression comprenant :
un mécanisme (10) pour amener un filament plastique,
un mécanisme (11) pour amener une fibre de renforcement,
un mécanisme (13, 14) pour couper la fibre de renforcement,
un tube d'amenée (15) pour le filament plastique,
un tube d'amenée (18) pour amener la fibre de renforcement du mécanisme d'amenée (11) au mécanisme de coupe (13, 14),
un tube d'amenée (19) pour amener la fibre de renforcement du mécanisme de coupe (13, 14) à une unité de chauffage (1) ; et
l'unité de chauffage (1) ;
dans laquelle l'unité de chauffage (1) comprend :
un réchauffeur (8),
un thermocouple (9) ou une thermistance (9),
deux canaux d'entrée, à savoir un canal d'amenée de fibre de renforcement (4) et un
canal d'amenée de filament plastique (2), et
une buse (6) ayant un canal de sortie (7) pour un polymère plastique renforcé ;
dans laquelle le canal d'amenée de filament plastique (2) est relié au canal d'amenée de fibre de renforcement (4) à l'intérieur de l'unité de chauffage (1), et le canal d'amenée de fibre de renforcement d'entrée (4) est agencé de manière coaxiale au canal de polymère plastique renforcé de sortie (7) ;
**caractérisée en ce que**
le canal d'amenée de fibre de renforcement d'entrée (4) de l'unité de chauffage (1) a un diamètre supérieur au diamètre de fibre de renforcement d'au plus 2 à 4 fois, le diamètre du canal d'amenée de fibre de renforcement d'entrée (4) étant inférieur au diamètre du canal de sortie (7) pour minimiser le rendement en matière fondue thermoplastique, lors de l'impression, à travers le canal d'amenée de fibre de renforcement (4), et **en ce que**
un espace est présent entre le tube d'amenée (15) pour la fibre de renforcement et le canal d'amenée de fibre de renforcement (4) de l'unité de chauffage (1).

2. Tête d'impression selon la revendication 1, dans laquelle le mécanisme de coupe de fibre de renforcement (13, 14) est situé entre le mécanisme d'amenée de fibre de renforcement (11) et l'unité de chauffage (1) et contient un couteau fixe (14) et un servomoteur (12) qui entraîne un couteau mobile (13).

3. Tête d'impression selon la revendication 1, dans laquelle le mécanisme de coupe de fibre de renforcement (13, 14) est situé entre le mécanisme d'amenée de fibre de renforcement (11) et l'unité de chauffage (1) et contient un servomoteur (12) dont l'axe est équipé d'un couteau mobile (13), qui est un cylindre circulaire avec une rainure réalisée à une profondeur dépassant la moitié du diamètre du cylindre.

4. Tête d'impression selon la revendication 3, dans laquelle le couteau fixe (14) est un tube avec deux trous : le trou d'entrée et le trou de sortie de plus grand diamètre.

5. Tête d'impression selon la revendication 3, dans laquelle le diamètre externe du couteau mobile (13) est égal au diamètre interne du couteau fixe (14) et le couteau mobile (13) est installé à l'intérieur du couteau fixe (14) par ajustement coulissant.

6. Tête d'impression selon la revendication 1, dans laquelle le tube d'amenée (18) pour amener la fibre de renforcement du mécanisme d'amenée (11) au mécanisme de coupe (13, 14) relie la sortie du mécanisme d'amenée de fibre de renforcement (11) à l'entrée du mécanisme de coupe de fibre de renforcement (13, 14) et le tube d'amenée (19) pour amener la fibre de renforcement du mécanisme de coupe (13, 14) à une unité de chauffage (1) relie la sortie du mécanisme de coupe de fibre de renforcement (13 , 14) au canal d'amenée de fibre de renforcement (4) de l'unité de chauffage (1).

7. Tête d'impression selon la revendication 1, dans laquelle le canal d'amenée de fibre de renforcement d'entrée (4) a un diamètre inférieur au diamètre du canal de sortie (7) de la buse (6).
